# EUROPEAN PATENT APPLICATION

(11) **EP 1 702 942 A1**
(43) Date of publication of application: **20.09.2006**
(21) Application number: 05292170.7
(22) Date of filing: 14.10.2005
(51) Int. Cl.: C08G 73/00, C08G 73/18, C08L 79/04, C08J 7/00, C08J 7/16, C08J 5/00, C08J 5/22, H01M 8/00, H01M 8/10

(54) **Polybenzimidazole based polymer and method for preparing the same**

(30) Priority: 17.03.2005 KR 2005022416
(71) Applicant: Korea Institute of Science and Technology, Seoul (KR)
(72) Inventor: Kim, Hyoung-Juhn, c/o 201-903 Dongsuwon LG, Suwon-si, Gyeonggi-do (KR); Cho, EunAc, c/o 105-1702 Saehan-apartment, Seoul (KR); Han, Jonghee, c/o 702 Seibanghi-vil, Seoul (KR); Yoon, Sung Pil, c/o 110-1401 Sangnokmaeul apt., Seongnam-si, Gyeonggi-do (KR); Lee, Jaeyoung, c/o 109-101 Daewoo apartment, Incheon (KR); Ha, Heung Yong, c/o 202-1408 Hyundai 2-cha apt., Seoul (KR); Nam, Suk-Woo, c/o 102-1201 Samsung Raemian, Seoul (KR); Oh, In-Hwan, c/o 101-803 SinanDongjin apt., Seoul (KR); Hong, Seong-Ahn, c/o 102-1301 Cheonggu-apt., Seoul (KR); Lim, Tae-Hoon, c/o 220-603 Family-apartment, Seoul (KR)
(74) Representative: Breese Derambure Majerowicz

(57) **Abstract**

Disclosed is a polybenzimidazole based polymer, which can be used at high temperature under no-humidification conditions for preparing a fuel cell, in particular, a fuel cell membrane instead of the existing Nafion type perfluorosulfonated polymers, with which it is easy to increase a doping level, and also, which exhibits an excellent mechanical strength, further, which is inexpensive. Further, disclosed is a method for preparing the polybenzimidazole based polymer.

## Description

### BACKGROUND OF THE INVENTION

### 1. Field of the Invention

The invention relates to a polybenzimidazole-based-polymer for preparing a fuel cell, in particular, a fuel cell membrane and a method for preparing the polybenzimidazole based polymer.

### 2. Description of the Related Art

Poly[2,2-(m-phenylene)-5,5-bibenzimidazole] (polybenzimidazole : PBI) and poly[2,5-benzimidazole] (ABPBI) can be used at high temperature under non-humidification conditions in a fuel cell.

Since the PBI are strongly resistant to an inorganic acid, it is possible to increase a doping level with the PBI. However, there are some disadvantages. A monomer for the PBI is expensive and a mechanical strength of the polymer is low especially under a doped state.

Contrary to the PBI, the ABPBI exhibits an excellent mechanical strength and can be prepared at low costs. However, since the ABPBI is not dissolved well in an organic solvent, it is difficult to prepare a membrane. Also, the ABPBI is dissolved well in the inorganic acid, so it is very difficult to increase a doping level with the ABPBI.

In the prior art, the PBI or ABPBI was used separately for preparing a fuel cell, in particular, a fuel cell membrane. Therefore, it was not possible to easily increase the doping level while obtaining the high mechanical strength.

### SUMMARY OF THE INVENTION

Accordingly, the present invention has been made to solve the above-mentioned problems occurring in the prior arts.

The object of the present invention is to provide a polybenzimidazole based polymer, which can be used at high temperature under no-humidification conditions for preparing a fuel cell, in particular, a fuel cell membrane which has high doping level and excellent mechanical properties and is inexpensive.

Another object of the present invention is to provide a method for preparing the polybenzimidazole based polymer.

In order to accomplish the objects, there is provided a polybenzimidazole based polymer being a copolymer having a repeating unit expressed as the following chemical formula 1. 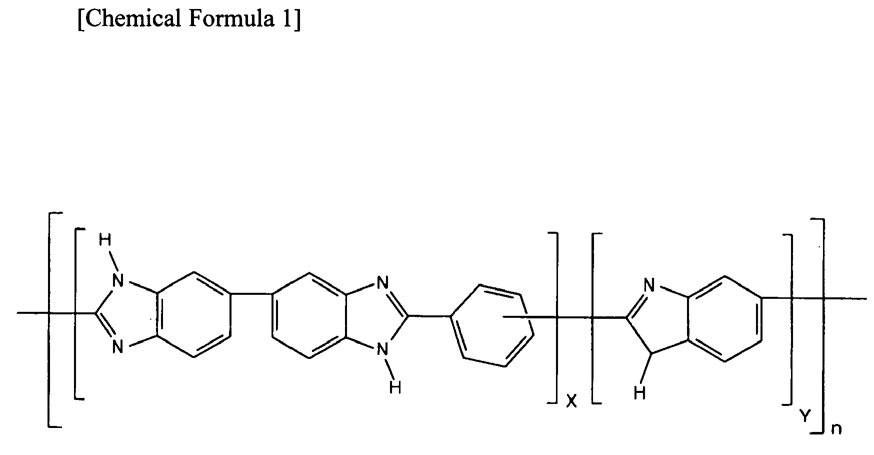 (n is a repeating unit number, and X and Y are percentages constituting the repeating unit)

In order to accomplish the above objects, there is a method for preparing a polybenzimidazole based polymer comprising a step of copolymerizing monomers consisting of 3,3'-diaminobenzidine, isophthalic acid (or terephthalic acid), and 3,4-diaminobenzoic acid.

According to the present invention, the copolymerization is performed after mixing the monomers with a polyphosphoric acid; or with a mixture of P₂O₅ and one or two of CH₃SO₃H and CF₃SO₃H.

According to the present invention, the copolymerization is performed at 150 ~ 200°C.

### DETAILED DESCRIPTION OF THE PREFERRED EMBODIMENTS

Hereinafter, the present invention will be described in detail by describing preferred embodiments.

According to the present invention, the PBI and the ABPBI are copolymerized so as to prepare such a polybenzimidazole based polymer having advantages of the PBI and the ABPBI without the disadvantages of each polymer.

3,3'-Diaminobenzidine and isophthalic acid (or terephthalic acid) are used as monomers. Further, 3,4-diaminobenzoic acid is used as a monomer.

Each of the monomers is mixed with a polyphosphoric acid, or with a mixture of P₂O₅ and CH₃SO₃H (or P₂O₅ and CF₃SO₃H, or P₂O₅ and CH₃SO₃H and CF₃SO₃H), and then copolymerized at 150 ~ 200°C by the following reaction formula1. 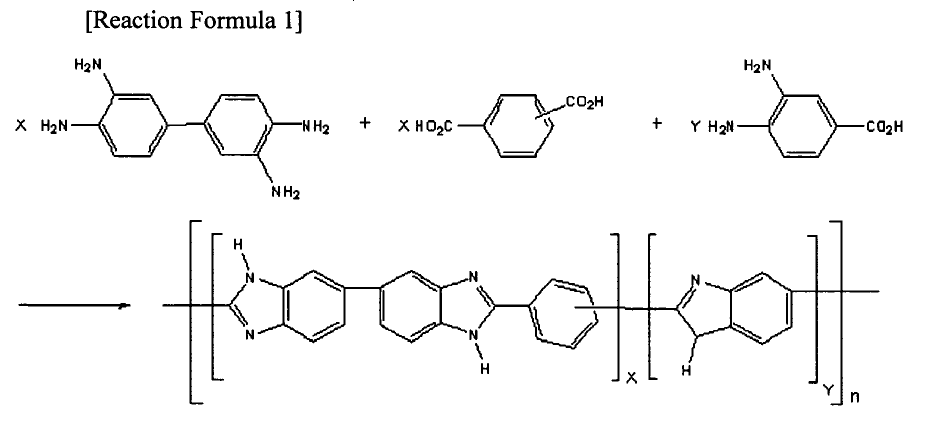 (n is a repeating unit number, and X and Y are percentages constituting the repeating unit. For example, when a summation of X and Y is 1, Y is 0.9 ~ 0.1 if X is 0.1 ~ 0.9)

It is easy to increase a doping level using the polybenzimidazole based copolymer having the repeating unit expressed in the chemical formula 1 prepared by the reaction formula 1. Also, the polybenzimidazole based copolymer exhibits an excellent mechanical strength. In addition, the cost for preparing the polybenzimidazole based copolymer is relatively inexpensive.

### [Example]

### Synthesis of polybenzimidazole based copolymer

The polybenzimidazole based copolymer in this example by the present invention was obtained as follows:

3,4-Diaminobenzoic acid (2.60g, 17.08 mmol, available from Acros), 3,3'-diaminobenzidine (1.83g, 8.54 mmol, available from Aldrich) and isophthalic acid (1.42g, 8.85 mmol) were mixed in polyphosphoric acid (35g) and then reacted at 200°C for 3 hours.

Then, the thus-produced polymer solution was deposited in water and a polybenzimidazole based copolymer was obtained.

### Preparation of a polybenzimidazole based copolymer membrane

A membrane consisting of the polybenzimidazole based copolymer was prepared as follows:

3,4-Diaminobenzoic acid (2.60g, 17.08 mmol, available from Acros), 3,3'-diaminobenzidine (1.83g, 8.54 mmol, available from Aldrich) and terephthalic acid (1.42g, 8.85 mmol) were mixed in a mixture of P₂O₅ (8g), CF₃SO₃H (25 ml) and CH₃SO₃H (25 ml), and then reacted at 160°C for 1 hour.

The polymer solution prepared as described above was uniformly applied on a glass plate using a doctor blade and then the glass plate having the polymer solution applied thereon was immersed in water in order to detach a membrane from the glass plate, thereby preparing the polybenzimidazole based copolymer membrane.

### Doping phosphoric acid on the polybenzimidazole based copolymer membrane

The prepared membrane was immersed in 85% H₃PO₄ for 48 hours, so that a polybenzimidazole based copolymer membrane having the phosphoric acid doped thereon was obtained.

### [Comparative Example 1 - ABPBI]

3,4-Diaminobenzoic acid (4g, 26.3 mmol, available from Acros) was mixed in a mixture of P₂O₅ (8g) and CH₃SO₃H (40 ml), and then reacted at 160°C for 1 hour.

The polymer solution prepared as described above was uniformly applied on a glass plate using a doctor blade and then the glass plate having the polymer solution applied thereon was immersed in water to detach a membrane from the glass plate, thereby preparing a ABPBI membrane. The membrane was immersed in 60% H₃PO₄ for 48 hours, so that the phosphoric acid doped ABPBI was obtained.

### [Comparative Example 2 - PBI]

3,3'-Diaminobenzidine (3.66g, 17.1 mmol, available from Aldrich) and terephthalic acid (2.84g, 17.1 mmol) were mixed in a mixture of P₂O₅ (8g), CF₃SO₃H (25 ml) and CH₃SO₃H (25 ml) and then reacted at 160°C for 1 hour.

The polymer solution prepared as described above was uniformly applied on a glass plate using a doctor blade and then the glass plate having the polymer solution applied thereon was immersed in water to detach a membrane from the glass plate, thereby preparing a PBI membrane. The membrane was immersed in 60% H₃PO₄ for 48 hours, so that the phosphoric acid doped PBI thereon was obtained.

Table 1 shows properties of the ABPBI of the comparative example 1, the PBI of the comparative example 2, and the polybenzimidazole based copolymer of example.

**[Table 1]**

| | Comparative example 1 | Comparative example 2 | polybenzimidazole based copolymer of example |
|---|---|---|---|
| Mechanical strength* | 100 Mpa | 55 Mpa | 79 MPa |
| Solubility** | Dissolved | Not dissolved | Not dissolved |
| Conductivity(S/cm)*** | 0.07 | 0.06 | 0.06 |

| | | | |
|---|---|---|---|
| * Young's modulus | | | |
| ** Solubility of each polymer in H₃PO₄ (85%) | | | |
| *** The doping levels of each polymer are approximately same (test temperature: 150 °C). | | | |

### Results

As can be seen from Table 1, it was possible to easily increase the doping level of the polybenzimidazole based copolymer of the example, because the copolymer was not dissolved in the inorganic acid (H₃PO₄).

In addition, regarding the mechanical strength, the polybenzimidazole based copolymer exhibited 75 MPa, compared to the mechanical strength of the PBI of the comparative example 2 (i.e., 55 Mpa).

Furthermore, the polybenzimidazole based copolymer by the present invention was also very useful in the economic viewpoint since it was possible to make the polymer with inexpensive monomer.

Many alterations and modifications may be made by those having ordinary skill in the art without departing from the spirit and scope of the invention. Therefore, it must be understood that the embodiment and example described above should not be taken as limiting the invention as defined by the following claims. The claims are thus to be understood to include what is specifically described above, what is conceptionally equivalent, what can be obviously substituted and also what essentially incorporates the essential idea of the invention.

## Claims

1. A polybenzimidazole based polymer being a copolymer having a repeating unit expressed as the following chemical formula 1. 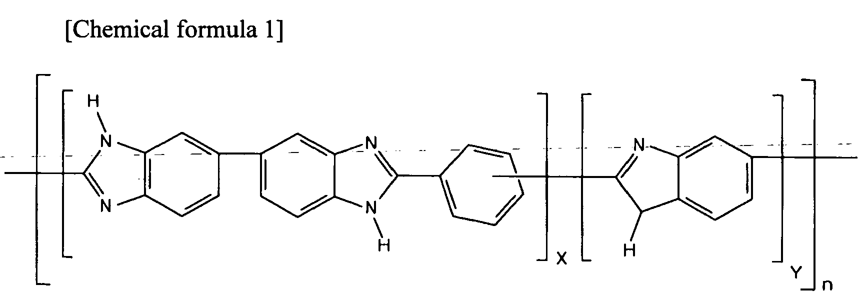 (n is a repeating unit number, and X and Y are percentages constituting the repeating unit)

2. A method for preparing a polybenzimidazole based polymer comprising a step of copolymerizing monomers consisting of 3,3'-diaminobenzidine; isophthalic acid or terephthalic acid; and 3,4-diaminobenzoic acid.

3. The method according to claim 2, wherein the copolymerization is performed after mixing the monomers with a polyphosphoric acid; or with a mixture of P₂O₅ and one or two of CH₃SO₃H and CF₃SO₃H.

4. The method according to claim 2, wherein the copolymerization is performed at 150~ 200°C.
